# FASCICULE DE BREVET EUROPEEN

(11) **EP 0 419 364 B1**
(45) Date de publication et mention de la délivrance du brevet: **10.08.1994**
(21) Numéro de dépôt: 90402607.7
(22) Date de dépôt: 20.09.1990
(51) Int. Cl.: B01D 19/00

(54) **Colonne pulsée annulaire fonctionnant en phase lourde continue avec limiteur d'entraînement de phase lourde en phase légère en présence de dégagements gazeux**
Pulsierende, ringförmige Kolonne mit kontinuierlicher schwerer Phase mit Mischungsbegrenzer zwischen leichter und schwerer Phase und gleichzeitiger Entgasung
Pulsating annular column functioning in continuous heavy phase with means for limiting the drag of heavy phase into the light phase in presence of gaseous evaporation

(30) Priorité: 22.09.1989 FR 8912496
(43) Date de publication de la demande: 27.03.1991
(73) Titulaire: COMMISSARIAT A L'ENERGIE ATOMIQUE, 75015 Paris Cédex 15 (FR)
(72) Inventeur: Coste, Joseph, F-30400 Villeneuve Les Avignons (FR)
(74) Mandataire: Dubois-Chabert, Guy

(56) Documents cités:
- AU-A- 531 804
- GB-A- 451 905
- US-A- 4 180 980

## Description

Le domaine de l'invention est celui des colonnes pulsées annulaires à l'intérieur desquelles sont en présence une phase lourde et une phase légère et dont le fonctionnement entraîne la présence de dégagements gazeux entravant le rendement de l'opération de séparation des deux phases.

L'invention concerne en particulier, un limiteur d'entraînement de la phase lourde dans la phase légère, provoqué par la présence de dégagements gazeux.

La plupart des colonnes pulsées sont utilisées pour mettre en contact deux phases constituées de deux liquides immiscibles, ou d'un liquide et d'un solide à l'état divisé. Cette mise en contact se fait généralement à contre courant des deux phases. Les colonnes comportent une partie supérieure munie d'une entrée, de la phase lourde et d'une sortie, de la phase légère. La partie centrale cylindrique d'axe vertical est munie de garnissage constitué par exemple de plateaux perforés ou de chicanes, destinés à favoriser le contact entre les deux phases. La partie inférieure comporte une entrée de la phase légère et une sortie de la phase lourde.

Un système de pulsation permet d'engendrer un mouvement oscillatoire de l'ensemble des phases en présence à l'intérieur de la colonne pulsée.

Ce type de colonnes pulsées trouve de nombreuses applications dans le domaine nucléaire, où ces colonnes sont utilisées fréquemment pour le traitement des solutions de combustibles irradiés, par extraction par solvant. Il est à noter que le risque d'apparition d'une réaction nucléaire en chaîne au sein des liquides présents dans les colonnes pulsées, impose certaines contraintes. En particulier, pour permettre un fonctionnement avec une concentration importante de produits fissiles, les colonnes pulsées sont de forme annulaire.

Dans les colonnes pulsées d'extraction liquide-liquide, fonctionnant en phase lourde continue, des dégagements gazeux sont formés, soit par réaction chimique, soit par l'injection de gaz, par exemple l'air issu des mesures faites par bullage.

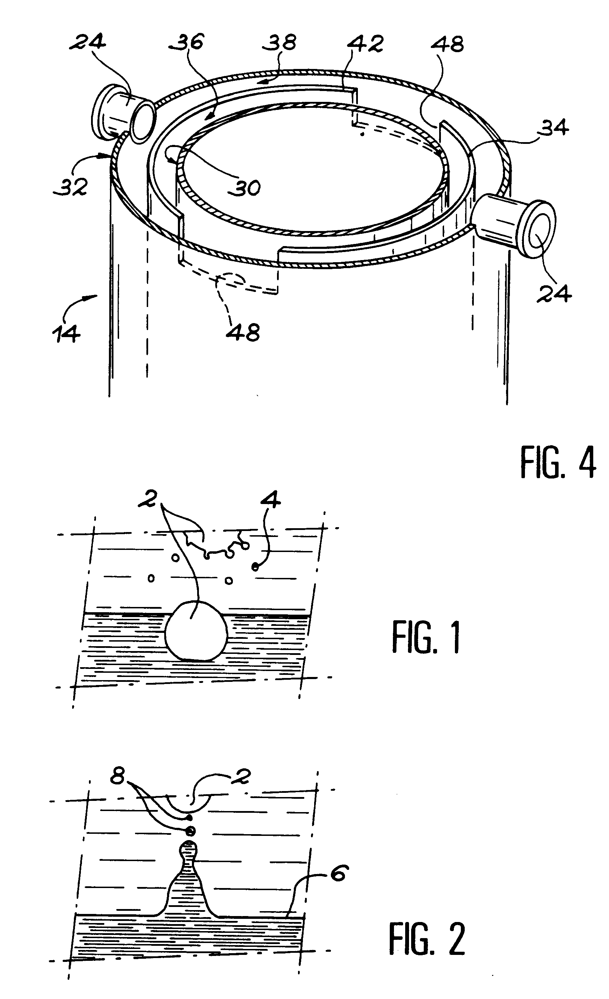

En référence à la figure 1, les bulles de gaz 2 sont porteuses d'un film liquide de phase lourde qui se fractionne en fines gouttelettes, appelées gouttes de film et repérées 4, sur la figure 1.

En référence à la figure 2, le franchissement de l'interface 6 par les bulles de gaz 2 entraîne la formation de gouttes de phases lourdes, appelées gouttes de jet et repérées 8, sur la figure 2.

Une fonction importante en colonne pulsée étant la séparation poussée des phases légère et lourde, il est primordial de réduire l'entraînement de phase lourde dans la phase légère qui se produit lorsqu'un flux gazeux ascendant traverse l'interface des deux phases.

Le but de l'invention est de résoudre ce problème.

A cet effet, l'objet principal de l'invention est une colonne pulsée de structure annulaire comprenant au moins un décanteur supérieur constitué d'une partie inférieure annulaire tronconique surmontée d'une partie centrale cylindrique. Ladite colonne fonctionne avec deux phases liquides, l'une lourde, l'autre légère, toutes deux mises en contact l'une de l'autre, l'interface entre la phase légère et la phase lourde se trouve dans la partie centrale cylindrique du décanteur supérieur : le fonctionnement de la colonne pulsée entraîne la présence d'un flux gazeux ascendant sous forme de bulles dans la phase lourde montant jusque dans la phase légère et provoquant la présence de phase lourde dans la phase légère. Le décanteur supérieur comporte au moins une canalisation de sortie de la phase légère dans la partie supérieure externe de la partie cylindrique.

Selon l'invention, la colonne pulsée comprend un limiteur d'entraînement de phase lourde dans la phase légère constituée d'une virole cylindrique de séparation dans la partie cylindrique du décanteur supérieur, coaxiale avec la structure annulaire et délimitant une partie interne et une partie externe de la partie cylindrique et dont l'extrémité inférieure se trouve en bas de la partie cylindrique et l'extrémité supérieure dans la phase légère, au-dessus du niveau de la canalisation de sortie, pour collecter lesdites bulles de gaz dans la partie interne et les évacuer au-dessus de la phase légère. De plus, il est prévu, à l'extrémité supérieure de la virole, des créneaux de passage pour faire communiquer la phase légère décantée de la partie interne avec la phase légère de la partie externe, ces créneaux de passage étant les plus éloignés possible des canalisations de sortie de la phase légère.

De cette manière, la sortie de la phase légère se fait par la partie externe de la partie cylindrique en l'absence de particules de phase lourde, ces dernières restant prisonnières dans la partie interne pour retomber au niveau de l'interface.

Un mode préférentiel de réalisation de l'invention prévoit que les canalisations de sortie sont au nombre de deux et sont placées à 180° l'une de l'autre. Dans ce cas, deux créneaux de passage sont placés à 180° l'un de l'autre et disposés angulairement à 90° de chaque canalisation de sortie.

L'invention prévoit des évents placés au-dessus de la phase légère pour évacuer les gaz extraits des deux phases.

L'invention et ses différentes caractéristiques seront mieux comprises à la lecture de la description qui suit, donnée à titre indicatif mais non limitatif, et qui est annexée des figures représentant respectivement :
- figures 1 et 2, le phénomène d'entraînement de phase lourde dans la phase légère en présence d'un flux gazeux ascendant ;
- figure 3, une coupe latérale d'un décanteur supérieur d'une colonne pulsée selon l'invention ; et
- figure 4, la partie supérieure du décanteur supérieur de la colonne pulsée selon l'invention.

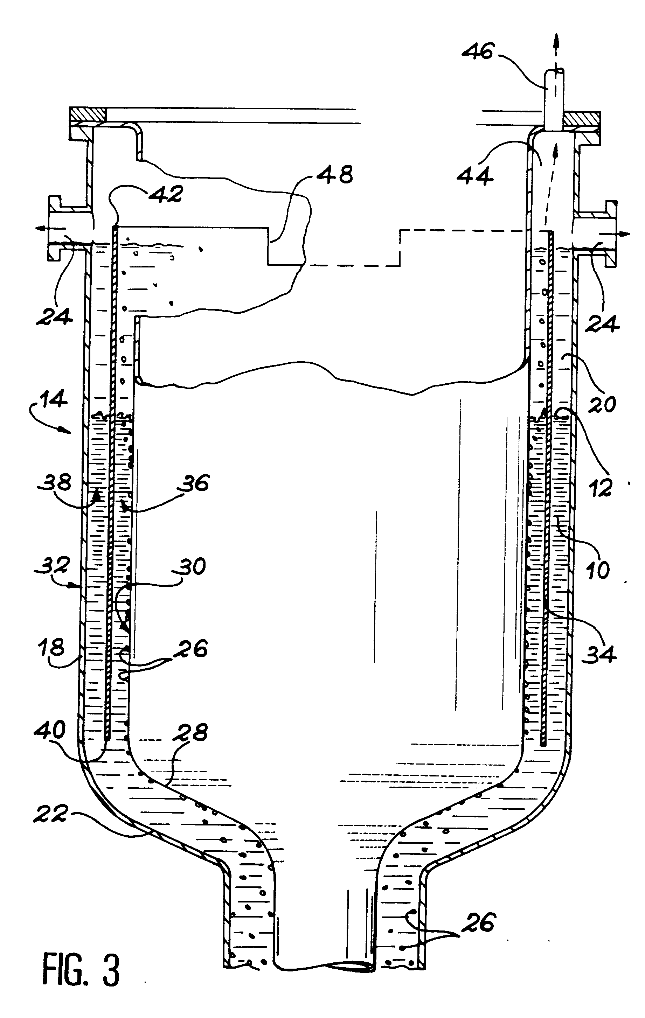

En revenant à la figure 3, une telle colonne pulsée contient donc une phase lourde 10 et une phase légère 20.

Lorsqu'il s'agit de traitement des solutions de combustibles irradiés par extraction par solvant, la phase lourde correspond à la phase aqueuse et la phase légère correspond au solvant. Ces deux phases sont séparées par un interface 12 qui se trouve, dans le cas des colonnes pulsées fonctionnant en phase lourde continue, dans la partie supérieure de la colonne pulsée, et plus exactement dans le décanteur supérieur 14. Celui-ci prolonge la partie centrale de la colonne pulsée par une partie tronconique annulaire 22 surmontée d'une partie cylindrique annulaire 18, à l'intérieur de laquelle se trouve l'interface 12. Au niveau de la limite supérieure de la phase légère 20, se trouve au moins une canalisation de sortie 24 de cette phase légère.

On rappelle que dans ce type de colonnes pulsées, on est en présence de bulles de gaz 26 issues de la partie centrale de la colonne pulsée et dues au fonctionnement de l'ensemble.

L'invention consiste à utiliser la paroi interne 28 de la partie tronconique 22 du décanteur supérieur 14 pour capter les bulles de gaz 26 qui continuent leur ascension dans le décanteur supérieur, plaquées contre cette paroi interne tronconique 28. Ces bulles 26 se trouvent donc rassemblées sur la paroi interne 30 de la partie cylindrique 18, aucune de ces bulles 26 ne pouvant se trouver vers la paroi externe 32 de la partie cylindrique 18 du décanteur supérieur 14.

Le dispositif limiteur d'entraînement de la phase lourde dans la phase légère se complète alors d'une virole 34 cylindrique de séparation, placée dans la partie cylindrique 18 du décanteur supérieur 14. Cette virole 34 est coaxiale avec les parois interne 30 et externe 32 de la partie cylindrique 18. Elle partage donc l'espace annulaire du décanteur supérieur 14 en une partie interne 36 et une partie externe 38 de la partie cylindrique 18. Les bulles de gaz 26 étant plaquées contre la paroi interne tronconique 28, pendant leur ascension, elles restent à proximité de la paroi interne 36 de la partie cylindrique 18. La virole 34 les empêche de pénétrer dans la partie externe 38 qui reste exempte de bulles de gaz. L'extrémité inférieure 40 de la virole se trouve au niveau de la jonction de la partie tronconique 22 et de la partie cylindrique 18. L'extrémité supérieure 42 de la virole 34 se trouve au-dessus de la limite supérieure de la phase légère 20.

On comprend que de cette manière, la phase légère 20 sortant par les canalisations de sortie 24, placées sur la partie externe 38 de la partie cylindrique 18, est exempte de phase lourde entraînée par d'éventuelles bulles de gaz.

Lorsque les bulles 26 continuent leur ascension dans la partie interne 36, elles franchissent l'interface 12, avec ou sans phase lourde, et franchissent ensuite la limite supérieure de la phase légère 20 pour se trouver dans une chambre supérieure 44 du décanteur supérieur 14. L'évacuation de ces gaz peut se faire à l'aide d'évents 46 placés en haut de cette chambre supérieure 44.

Les quelques particules de phase lourde entraînées dans la phase légère, dans la partie interne 36 de la partie cylindrique 18, se détachent des bulles de gaz et ont tendance à retomber dans la phase lourde 10 au niveau de l'interface 12.

En référence à la figure 4, la limite supérieure de la phase légère de la partie interne 36 étant exempte de phase lourde, on prévoit de faire communiquer la partie interne 36 avec la partie externe 38, de manière à récupérer cette phase légère décantée. A cet effet, on utilise au moins un créneau de passage 48 placé dans l'extrémité supérieure 42 de la virole 34. Ce créneau de passage 48 descend au moins jusqu'au niveau supérieur de la phase légère de manière à créer une communication entre les parties interne 36 et externe 38.

Dans la réalisation représentée, il est prévu deux canalisations de sortie 24, disposées angulairement à 180° l'une de l'autre. Dans ce cas, on utilise deux créneaux de passage 48 disposés également à 180° l'un de l'autre, mais décalés angulairement de 90° par rapport aux canalisations de sortie 24. Ceci dans le but de les situer le plus loin possible de ces canalisations de sortie 24, de manière à prolonger au maximum le phénomène de décantation dans la phase légère, au cas où quelques particules de phase lourde franchiraient les créneaux de passage 48. De manière générale, les créneaux de passage 48 sont disposés le plus loin possible des canalisations de sortie 24.

L'invention peut être appliquée de préférence à un système liquide-liquide constitué des deux phases suivantes :
- une phase lourde aqueuse, constituée de HNO₃ à 0,01 N et de 80 g d'uranium/l ;
- une phase légère organique composée de HNO₃ à 0,001 N et de 75 g d'uranium/l avec 30 % de phosphate de tributyle dans le tétrapropylène hydrogéné.

Avec un décanteur supérieur de diamètre moyen égal à 900 mm, une virole de 570 mm de hauteur, avec deux canalisations de sortie et deux créneaux de passage de 300 mm de largeur et de 40 mm de profondeur en dessous du niveau des canalisations de sortie, avec un débit spécifique de phase légère égal à environ 0,7 l/h/cm² et un débit de gaz simulé égal à 0,12 l/h/cm², la présence de la virole constituant le limiteur d'entraînement de phase lourde dans la phase légère, permet d'obtenir cinquante fois moins de phase lourde dans la phase légère que lorsque l'on n'utilise pas un tel limiteur d'entraînement.

## Revendications

1. Colonne pulsée de structure annulaire comprenant au moins un décanteur supérieur (14), lui-même constitué d'une partie inférieure annulaire tronconique (22) surmontée d'une partie centrale cylindrique (18), le décanteur supérieur (14) comportant au moins une canalisation de sortie (24) de la phase légère (20) dans la partie cylindrique (18), ces caractéristiques étant aptes à faire fonctionner la colonne avec deux phases liquides, l'une lourde (10), l'autre légère (20), mises en contact l'une de l'autre, l'interface (12) entre la phase légère (20) et la phase lourde (10) se trouvant dans la partie centrale cylindrique (18) du décanteur supérieur (14), le fonctionnement de la colonne pulsée entraînant la présence d'un flux gazeux ascendant sous forme de bulles (26) dans la phase lourde (10) qui montent jusque dans la phase légère (20), provoquant la présence de phase lourde dans la phase légère, la colonne étant caractérisée en ce qu'elle comprend un limiteur d'entraînement de la phase lourde (6) dans la phase légère (20) constitué d'une virole cylindrique (34) dans la partie cylindrique (18), coaxiale avec cette partie cylindrique (18) délimitant ainsi une partie interne (36) et une partie externe (38) de la partie cylindrique (18) et dont l'extrémité inférieure (40) se trouve en bas de la partie cylindrique (18) et l'extrémité supérieure (42) se trouve au-dessus du niveau de la canalisation de sortie (24) pour être dans la phase légère (20) et pour collecter lesdites bulles de gaz (26) dans la partie interne (36) et pour les évacuer au-dessus de la phase légère (20), la virole cylindrique (34) comprenant des créneaux de passage (48) dans l'extrémité supérieure (42) de la virole (34) pour faire communiquer la phase légère de la partie interne (36) avec la phase légère de la partie externe (38), ces créneaux de passage (48) étant les plus éloignés possible des canalisations de sortie (24) de la phase légère (20).

2. Colonne pulsée selon la revendication 1, caractérisée en ce qu'elle comprend deux canalisations de sortie (24) placées angulairement à 180° l'une de l'autre, et deux créneaux de passage (48), placés angulairement à 180° l'un de l'autre et à 90° de chaque canalisation de sortie (24).

3. Colonne pulsée selon l'une quelconque des revendications précédentes, caractérisée en ce qu'elle comprend des évents (46) placés au-dessus de la phase légère (20) pour évacuer les gaz extraits des deux phases.

## Patentansprüche

1. Pulsierende Kolonne mit ringförmigem Aufbau, die wenigstens ein oberes Dekantiergefäß (14) umfaßt, das seinerseits aus einem unteren, ringförmigen, kegelstumpfförmigen Bereich (22) besteht, der von einem zentralen, zylinderförmigen Bereich (18) überspannt wird, wobei das obere Dekantiergefäß (14) wenigstens eine Ausgangskanalisation (24) für die leichte Phase (20) in seinem zylinderförmigen Bereich (18) umfaßt, wobei diese Merkmale dazu geeignet sind, die Kolonne mit zwei flüssigen Phasen, einer schweren (10) und einer leichten (20), die miteinander in Verbindung gebracht werden, funktionieren zu lassen, wobei die Grenzfläche (12) zwischen der leichten Phase (20) und der schweren Phase (10) sich im zentralen, zylinderförmigen Bereich (18) des oberen Dekantiergefässes (14) befindet, wobei die Arbeitsweise der pulsierenden Kolonne die Anwesenheit eines Gasflusses nach sich zieht, der in der Form von Blasen (26) in der schweren Phase (10) noch oben steigend bis zur leichten Phase (20) aufsteigt, was die Anwesenheit von schwerer Phase in der leichten Phase nach sich zieht, wobei die Kolonne dadurch gekennzeichnet ist, daß sie einen Mischungsbegrenzer für die schwere Phase (6) in der leichten Phase (20) umfaßt, der aus einem zylindrischen Mantel (34) im zylinderförmigen Teil (18) besteht, der koaxial mit diesem zylinderförmigen Teil (18) ist und somit einen inneren Teil (36) und einen äußeren Teil (38) des zylindrischen Teils (18) abgrenzt und dessen unteres Ende (40) sich unter dem zylindrischen Teil (18) und dessen oberes Ende (42) sich oberhalb der Höhe der Ausgangskanalisation (24) befindet, um sich in der leichten Phase (20) zu befinden und um die Gasblasen (26) in dem inneren Teil (36) zu sammeln und um sie oberhalb der leichten Phase (20) abzuführen, wobei der zylinderförmige Mantel (34) Durchgangsfenster (48) im oberen Ende (42) des Mantels (34) umfaßt, um die leichte Phase des inneren Teils (36) mit der leichten Phase des äußeren Teils (38) in Verbindung zu bringen, wobei diese Durchgangsfenster (48) soweit wie möglich von den Ausgangskanälen (24) der leichten Phase (20) entfernt sind.

2. Pulsierende Kolonne nach Anspruch 1, dadurch gekennzeichnet, daß sie zwei Ausgangskanäle (24), die gegenseitig im Winkel von 180° angeordnet sind, und zwei Durchgangsfenster (48) umfaßt, die gegenseitig im Winkel von 180° und im Winkel von 90° bezüglich jedes Ausgangskanals (24) angeordnet sind.

3. Pulsierende Kolonne nach einem der vorhergehenden Ansprüche, dadurch gekennzeichnet, daß sie Lüftungslöcher (46) umfaßt, die über der leichten Phase (20) angeordnet sind, um die aus den zweiten Phasen extrahierten Gase zu abzuführen.

## Claims

1. Annular pulsed column having at least one upper decanter (14), which is itself constituted by a lower, annular, truncated cone-shaped portion (22) surmounted by a central, cylindrical portion (18), the upper decanter (14) having at least one discharge duct (24) for discharging the light phase (20) into the cylindrical portion (18), said characteristics being able to make the column function with two liquid phases, one (10) being heavy and the other (20) light, which are contacted with one another, the interface (12) between the light phase (20) and the heavy phase (10) being in the central, cylindrical portion (18) of the upper decanter (14), the operation of the pulsed column leading to the presence of a rising gaseous flow in the form of bubbles (26) in the heavy phase (10) and which rise into the light phase (20) bringing about the presence of heavy phase in the light phase, the column being characterized in that it comprises a limiter of entrainment of the heavy phase (6) into the light phase (20) constituted by a cylindrical sleeve (34) in the cylindrical portion (18) and coaxial with the latter, thus defining an inner part (36) and an outer part (38) of the cylindrical portion (18) and whose lower end (40) is at the bottom of the cylindrical portion (18) and the upper end (42) is above the level of the discharge duct (24) so as to be in the light phase (20) and for collecting said gas bubbles (26) in the inner part (36) and for discharging them above the light phase (20), the cylindrical sleeve (34) having passage indentations (48) in the upper end (42) of the sleeve (34) in order to link the light phase of the inner part (36) with the light phase of the outer part (38), said passage indentations (48) being as far as possible from the discharge ducts (24) for the light phase (20).

2. Pulsed column according to column 1, characterized in that there are two discharge ducts (24) positioned angularly at 180° from one another, as well as two passage indentations (48), positioned angularly at 180° from one another and 90° from each discharge duct (24).

3. Pulsed column according to any one of the preceding claims, characterized in that there are vents (46) placed above the light phase (20) in order to discharge gases extracted from both phases.
